# EUROPEAN PATENT APPLICATION

(11) **EP 2 352 053 A1**
(43) Date of publication of application: **03.08.2011**
(21) Application number: 09823733.2
(22) Date of filing: 16.03.2009
(51) Int. Cl.: G02C 13/00

(54) **COUPLING METHOD AND STRUCTURE FOR COUPLING UNIT OF RIMLESS EYEGLASSES**

(30) Priority: 27.10.2008 KR 20080105353
(71) Applicant: Kim, Young Ho, Gyeongsangbuk-do 712-840 (KR)
(72) Inventor: Kim, Young Ho, Gyeongsangbuk-do 712-840 (KR)
(74) Representative: Chaillot, Geneviève
(86) International application number: PCT/KR2009/001290
(87) International publication number: WO 2010/050653

(57) **Abstract**

The present invention relates to a coupling method and a structure for a coupling unit of rimless eyeglasses. More specifically, the invention relates to the coupling method and the coupling structure that can not only increase the coupling force of a coupling member but also prevent damage to or defects of the coupling unit, wherein the coupling member is coupled to end pieces and a bridge to be coupled with lenses of the rimless eyeglasses. The object of the invention is to provide the coupling method and the coupling structure that: improve connection stability of a fixing bolt through soldering-welding at the end pieces or bridge when the coupling member fixed to the coupling unit is inserted into the rear portion of a fixture; prevent the occurrence of welding beads on the coupling member; and increase the coupling force of the coupling member by allowing the fixing of the coupling member through one-time soldering-welding in order to prevent damage to or defects of the coupling member when the coupling member is coupled to the lenses. In order to implement the object, the coupling structure comprises: the fixtures (3,3') that are extended and formed from nose pad arms (2) or additionally formed; a fixing unit that is configured to fix the coupling member (4) to the fixtures (3,3'); and an assembly unit for coupling the end pieces (52) and/or the bridge (B) to the coupling member (4) which is coupled to the fixtures (3,3') through the fixing unit. In addition, the coupling method comprises: a step for inserting the coupling member into a through hole (5) formed at the fixtures (3,3') and fixing the coupling member and the fixtures by an attachment plate; and a step for coupling the bridge and/or the end pieces to the fixtures and the coupling member that are fixed by the attachment plate.

## Description

### [Technical Field]

The present invention relates to a coupling method and structure for coupling units in rimless eyeglasses and, more particularly, to a coupling method and structure for coupling units in rimless eyeglasses, which are capable of improving bonding force of coupling members connected to endpieces and a bridge in order to connect rimless eyeglass lenses to the rimless eyeglasses and also preventing damage to or a defect in the coupling members.

### [Background Art]

In general, eyeglasses are classified into eyeglasses, having the rim of the eyeglasses into which lenses can be inserted formed therein, and so-called rimless eyeglasses having the lenses fixed thereto without the rim of the eyeglasses.

The rimless eyeglasses can be fabricated very light because they do not include the rim of the eyeglasses for fixing lenses. Holes are formed in the lenses, and the lenses, endpieces, and temples are connected through the holes.

In the rimless eyeglasses, it is difficult to fix the lenses because the rim for fixing the lenses does not exist, and coupling members for connecting the lenses and the endpieces are damaged owing to weak fixation or the lenses are broken by the coupling members. Accordingly, it is very important to improve bonding force of the coupling members such that the bonding force of the lenses and the endpieces is improved.

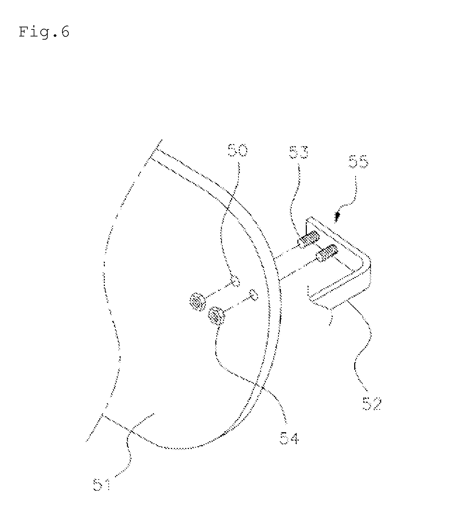

FIG. 6 is an enlarged perspective view showing the coupling unit coupling structure of conventional rimless eyeglasses. The coupling structure includes a lens 51 configured to have coupling holes 50 formed therein, fixing bolts 53 formed to penetrate the respective coupling holes 50 and fixed to the coupling unit 55 of an endpiece 52, and nuts 54 coupled to the respective fixing bolts 53 and configured to fix the lens 51 thereto.

In other words, in the rimless eyeglasses, in order to fix the lens 51, the fixing bolts 53 fixed to the coupling unit 55 of the endpiece 52 penetrate the coupling holes 50 of the lens 51, and the nuts 54 are coupled to the penetrating fixing bolts 53, thereby pressing the lens 51 and fixing the lens 51.

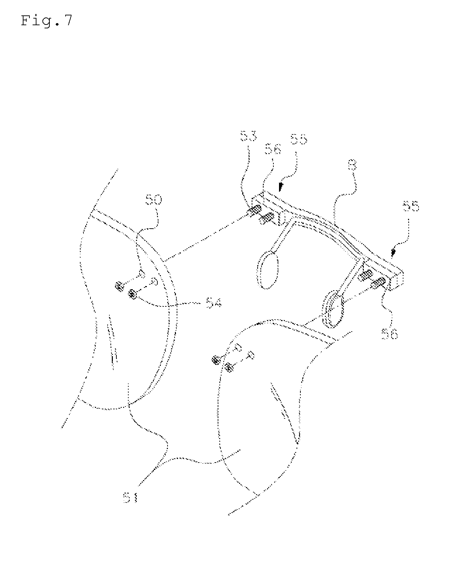

Furthermore, FIG. 7 is an enlarged perspective view showing the coupling unit coupling structure of another pair of conventional rimless eyeglasses. The coupling structure includes fixtures 56 of a sheet form and a plurality of fixing bolts 53 of a small volume. The fixture 56 is made of stainless in order to connect fixing bolts 53 to the coupling unit 55 of a bridge B made of nickel-plated shape memory alloys and is configured to have a back thereof fixed to one face of the coupling unit 55 of the bridge B by means of soldering and welding. The plurality of fixing bolts 53 is configured to have one faces welded to the front of the fixed fixtures 56 by means of soldering and welding and is inserted into the respective coupling holes 50 of lenses 51.

In other words, since the bridge B is made of nickel-plated shape memory alloys, the fixing bolts 53 of a small volume are not fixed to the surface of the coupling unit 55 upon soldering and welding, but are broken. When the fixture 56 of a sheet form is fixed to the surface of the bridge B, the fixing bolts 53 are fixed to the fixture 56 by means of soldering and welding.

### [Disclosure]

### [Technical Problem]

However, when the fixing bolts are fixed to the endpieces or the coupling units of the bridge by means of soldering and welding as described above or the fixing bolts are fixed to the fixtures by means of soldering and welding, welding beads generated upon soldering and welding are formed at the welding portions of the fixing bolts. Accordingly, there is a problem in that the lenses are broken by the welding beads owing to pressure applied when the lenses are fixed by the endpieces and the bridge.

Furthermore, when the fixing bolts are fixed to the endpieces or the coupling units of the bridge by means of soldering and welding, the fixing bolts are fixed by eye measure of a worker. Accordingly, assembly is not complete or the lenses or the fixing bolts are broken upon assembly because the fixing bolts are not matched with the positions of the coupling holes formed in the lenses. Furthermore, since the fixture having the fixing bolts fixed thereto is fixed to the front of the coupling unit of the bridge by means of soldering and welding, the thickness of the bridge is increased. Accordingly, there is a problem in that value of commodities is degraded in appearance.

Furthermore, since a soldering and welding task is repeatedly performed in order to fix the fixing bolts or a nose pole to the endpieces or the fixtures of the bridge, stress is generated in the fixing bolts because of welding heat. Accordingly, there is a problem in that a severe defect, such as broken fixing bolts, is generated in the endpieces or the bridge.

Accordingly, the present invention has been made keeping in mind the above problems occurring in the prior art, and an object of the present invention is to provide a coupling method and structure for coupling units in rimless eyeglasses, wherein fixing bolts can be accurately fixed and positioned and welding beads are not generated in coupling members because soldering and welding are performed for endpieces or a bridge in the state in which the coupling members fixed to the coupling units are inserted into the back of fixing pieces, and bonding force of the coupling members can be improved and damage to or a defect in the coupling members when the coupling members are connected to lenses can be prevented because the coupling members are fixed by one soldering and welding task.

### [Technical Solution]

To achieve the above objects, the present invention includes fixing grooves 1 formed in respective endpieces 52 or a bridge B or both and configured to be coupled to the coupling holes 50 of lenses 51, fixing pieces 3 and 3' extended and formed from respective nose poles 2 or separately fabricated, fixing means configured to fix coupling members 4 to the fixing pieces 3 and 3', and assembly means configured to couple the coupling members 4, coupled to the fixing pieces 3 and 3' by means of the fixing means, to the fixing grooves 1.

Furthermore, a coupling method includes the steps of inserting the coupling members into through holes 5 formed in each of the fixing pieces 3 and 3' and fixing the coupling members and the fixing pieces using attachment plates, and coupling the fixing pieces and the coupling members, fixed together by the attachment plate, to a bridge or endpieces or both.

### [Advantageous Effects]

As described above, the present invention is advantageous in that bonding force can be further improved because the coupling members are fixed to the endpieces and the bridge by means of one soldering and welding task and the lifespan of rimless eyeglasses can be improved because damage to or a defect in the coupling members can be prevented.

### [Description of Drawings]

FIG. 1 is an exploded perspective view showing rimless eyeglasses according to the present invention;
FIG. 2 is an exploded perspective view showing the coupling unit coupling structure of a bridge in FIG. 1;
FIG. 3 is a cross-sectional view taken along line A-A in FIG. 1;
FIG. 4 is a cross-sectional view showing a state in which the coupling unit is connected according to the present invention;
FIG. 5 is a cross-sectional view showing a state in which a fixing pin (that is, a coupling member) is connected to a lens according to another embodiment of the present invention;
FIG. 6 is an enlarged perspective view showing the coupling unit coupling structure of conventional rimless eyeglasses; and
FIG. 7 is an enlarged perspective view showing the coupling unit coupling structure of another pair of conventional rimless eyeglasses.

### <Description of reference numerals of principal elements in the drawings>

| | | | |
|---|---|---|---|
| 1: | fixing groove | 2: | nose pole |
| 3, 3': | fixing piece | 4: | coupling member |
| 5: | through hole | 6: | head unit |
| 7: | attachment plate | 8: | hanging groove |
| 50: | coupling holes | 51: | lens |
| 52: | endpiece | 53: | fixing bolts |
| 54: | nuts | 55: | coupling unit |
| 56: | fixture | B: | bridge |

### [Best Mode]

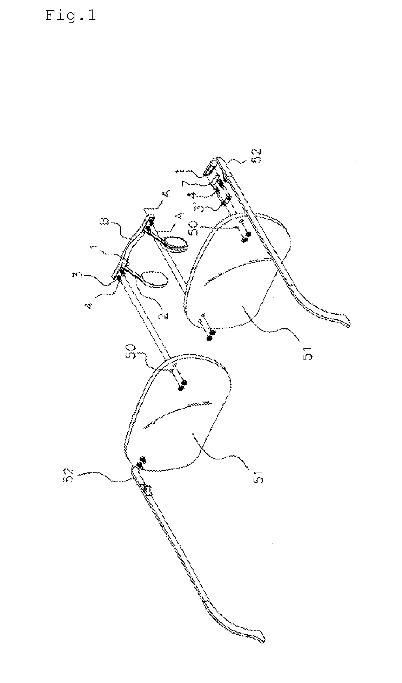

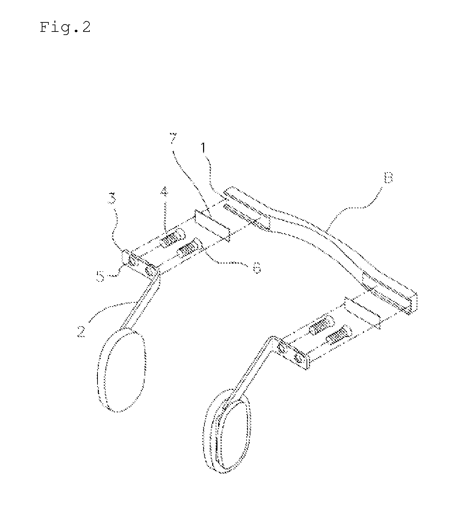

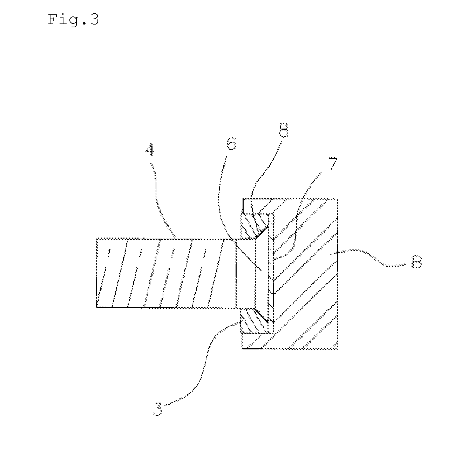

FIG. 1 is an exploded perspective view showing rimless eyeglasses according to the present invention, FIG. 2 is an exploded perspective view showing the coupling unit coupling structure of a bridge in FIG. 1, and FIG. 3 is a cross-sectional view taken along line A-A in FIG. 1. The coupling structure includes fixing pieces 3 and 3' extended and formed from respective nose poles 2 or separately fabricated, fixing means configured to fix coupling members 4 to the fixing pieces 3 and 3', and assembly means configured to connect the coupling members 4, coupled to the fixing pieces 3 and 3' by means of the fixing means, to endpieces 52 or a bridge B or both.

That is, when the coupling structure is applied to the nose pole 2 and the bridge B, the fixing piece 3 is extended and formed from the nose pole 2. When the coupling structure is applied to the endpiece 52, the fixing piece 3' separately fabricated is used.

Fixing grooves 1 are formed in the respective endpieces 52 or the bridge B or both so that the coupling members 4 coupled to the fixing pieces 3 and 3' by means of the fixing means can be coupled to the endpieces 52 or the bridge B or both.

The fixing means includes one or more through holes 5 formed in each of the fixing pieces 3 and 3' and attachment plates 7 made of a silver solder plate and configured to fix the head units 6 of the coupling members 4 to the fixing pieces 3 and 3' when the coupling members 4 are inserted into the through holes 5.

In the fixing means, the head units 6 of the coupling members 4 may be fixed to the fixing pieces 3 and 3' by means of spot welding, etc. without using the attachment plates 7.

The assembly means is configured to strongly fix the fixing pieces 3 and 3', having the attachment plates 7 and the coupling members 4 connected thereto, to the fixing grooves 1 by means of soldering and welding.

That is, the coupling members 4 are coupled to the fixing pieces 3 and 3', and thus the fixing pieces 3 and 3' are strongly fixed to the fixing grooves 1. Accordingly, the coupling holes 50 of lenses 51 and the coupling members 4 are coupled to the same position, and thus the coupling members 4 can be easily assembled with the lenses 51.

Furthermore, the assembly means may be configured to strongly fix the fixing pieces 3 and 3', having the respective attachment plates 7 and the coupling members 4 coupled thereto, to the respective endpieces 52 or the bridge B or both by means of soldering and welding.

The reason why the attachment plates 7 are formed of the silver solder plates is that the coupling members 4 can be fixed by means of spot welding when the attachment plates 7 are fixed to the respective fixing pieces 3 and 3' and the attachment plates 7 can be welded by means of soldering and welding even when the fixing pieces 3 and 3' are coupled to the respective fixing grooves 1.

The attachment plates 7 may not be formed of welding members, such as the silver solder plates, but may be made of bonding material. In this case, there is a possibility that the attachment plates 7 may be separated from the respective fixing pieces 3 and 3' during use because bonding force is weak.

Furthermore, hanging grooves 8 are formed in the respective fixing pieces 3 and 3' such that the fixing pieces 3 and 3' are not protruded externally and the head units 6 of the coupling members 4 are inserted into and latched to the hanging grooves 8.

The operation and advantages of the present invention constructed as above are described below. First, a plurality of fixing bolts (that is, the coupling members 4) is inserted into the respective through holes 5 of the fixing piece 3 extended and formed from the nose pole 2 from the back of the fixing piece 3.

Here, the head units 6 of the fixing bolts (that is, the coupling members 4) inserted into the fixing piece 3 are latched in the hanging groove 8 formed in the fixing piece 3 within the through hole 5, and thus the positions of the head units 6 are limited.

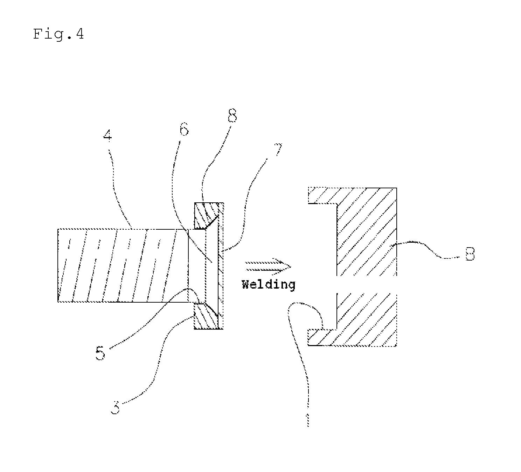

As shown in FIG. 4, the attachment plate 7, such as the silver solder plate, is brought in contact with the back of the fixing piece 3 having the fixing bolts (that is, the coupling members 4) coupled thereto as described above in order to prevent the fixing bolts (that is, the coupling members 4) from being deviated backwardly from the fixing piece 3. In this state, the fixing bolts (that is, the coupling members 4) are fixed to the fixing piece 3 by means of spot welding such that the head units 6 of the fixing bolts (that is, the coupling members 4) are not deviated from the fixing piece 3.

The fixing piece 3 having the fixing bolts (that is, the coupling members 4) assembled therewith is inserted into the bridge B or into the fixing grooves 1 formed on both sides of the bridge B and is then soldered and welded. Accordingly, the attachment plate 7, such as the silver solder plate, is melted, so that the fixing piece 3 and one faces of the fixing bolts (that is, the coupling members 4) are strongly fixed to the bridge B or to the fixing grooves 1 formed on both sides of the bridge B.

Meanwhile, the head units 6 of the fixing bolts (that is, the coupling members 4) and the fixing piece 3 may be directly fixed to the bridge B or to the fixing grooves 1 formed on both sides of the bridge B by means of spot welding, without using the attachment plate 7, such as the silver solder plate, in the back of the fixing piece 3.

Here, when the head units 6 of the fixing bolts (that is, the coupling members 4) are coupled to the endpieces 52 or the bridge B or both or to the endpieces 52 or the fixing grooves 1 of the bridge B in the state in which the head units 6 have been fixed to the fixing piece 3 by means of spot welding, the attachment plates 7, such as the silver solder plate, are welded and fixed to the endpieces 52 or the bridge B or both through soldering and welding, while being inserted into the endpieces 52 or the bridge B or both.

That is, one faces of the fixing bolts (that is, the coupling members 4) and the fixing piece 3 having the plurality of fixing bolts 4 assembled therewith as described above are fixed to the bridge B or the fixing grooves 1 formed on both sides of the bridge B by means of one soldering and welding. Accordingly, damage to or a defect in the fixing bolts (that is, the coupling members 4) due to repetitive soldering and welding tasks can be effectively prevented, and thus bonding force of the fixing bolts (that is, the coupling members 4) can be maintained.

The fixing bolts (that is, the coupling members 4) fixed as described above are inserted into the respective coupling holes 50 on one side of the lens 51. When the plurality of inserted fixing bolts 4 is protruded outside the lens 51, the nuts 54 are screwed with the fixing bolts 4 from the other side of the lens 51 so that the pair of lenses 51 is strongly coupled by the bridge B.

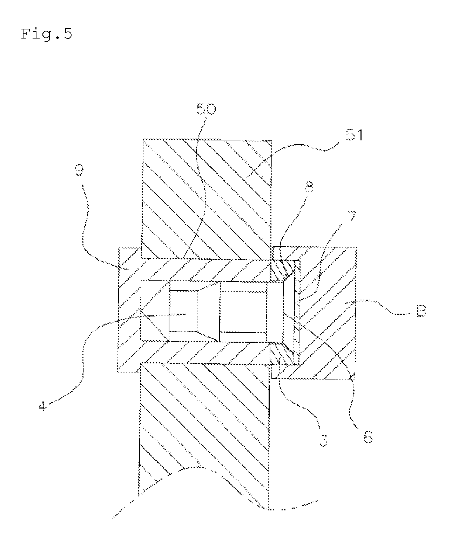

Meanwhile, when the coupling member 4 is used as a fixing pin as shown in FIG. 5, a fixing cap 9 is inserted into the coupling hole 50 of the lens 51, and the fixing pin (that is, the coupling member 4) is then forcedly fitted into the fixing cap 9 so that the bridge B and the lens 51 are connected together.

Furthermore, when the bridge B is coupled to the lens 51, the endpiece 52 is coupled to the lens 51. The fixing bolts (that is, the coupling members 4), coupled to the end of the endpiece 52 along with the fixing piece 3, are inserted into the coupling holes 50 formed in the lens 51. When the nuts 54 are screwed with the fixing bolts, the lens 51 and the endpiece 52 can be easily connected together.

To fix the fixing bolts (that is, the coupling members 4) to the endpiece 52 as described above is performed in the same manner that the fixing bolts (that is, the coupling members 4) are fixed to the bridge B.

Furthermore, the bridge B and the endpieces 52 made of shape memory alloys may be used as the bridge B and the endpiece 52. Here, an external surface of the bridge B and the endpieces 52 may be plated with nickel so that the fixing pieces 3 made of metal material can be soldered and welded.

Meanwhile, a method of coupling the coupling units of the endpiece and the bridge according to the present invention includes the steps of inserting the coupling members 4 into the respective through holes 5 formed in each of the fixing pieces 3 and 3', fixing the fixing pieces 3 and 3' and the coupling members 4 using the attachment plates 7, and connecting the fixing pieces 3 and 3' and the coupling members 4, fixed by the attachment plates 7, to the bridge B or the endpieces 52 or both.

It is preferred that the fixing pieces 3 and 3' and the coupling members 4 be fixed together by means of spot welding by using the silver solder plates as the attachment plates 7.

Furthermore, the attachment plates 7 (that is, the silver solder plates attached to the fixing pieces 3,3' and the coupling members 4) are connected to the endpieces 52 or the bridge B or both by means of soldering and welding, thereby fixing the coupling members 4.

Meanwhile, the coupling members 4 may be fixed by attaching the fixing pieces 3 and 3' and the coupling members 4, having the attachment plates 7 coupled thereto, to the endpieces 52 or the fixing grooves 1 formed in the bridge B.

[Industrial Applicability]

## Claims

1. A coupling structure for coupling units in rimless eyeglasses, the coupling structure comprising:
fixing pieces extended and formed from respective nose poles or separately fabricated;
fixing means configured to fix coupling members to the fixing pieces; and
assembly means configured to connect the coupling members, coupled to the fixing pieces by means of the fixing means, to endpieces or a bridge or both.

2. The coupling structure according to claim 1, further comprising fixing grooves formed in the respective endpieces or the bridge or both and configured to have the coupling members, coupled to the fixing pieces, coupled thereto.

3. The coupling structure according to claim 1, wherein the fixing means is configured to comprise one or more through holes formed in each of the fixing pieces and to fix the coupling members to the fixing pieces when the coupling members are inserted into the through holes by spot-welding head units of the coupling members.

4. The coupling structure according to claim 1, wherein the fixing means comprises:
one or more through holes formed in each of the fixing pieces; and
attachment plates configured to fix head units of the coupling members to the fixing pieces when the coupling members are inserted into the through holes.

5. The coupling structure according to claim 1, wherein the assembly means is configured to strongly fix the fixing pieces, each having the attachment plate and the coupling members coupled thereto, to the respective endpieces or the bridge or both by means of soldering and welding.

6. The coupling structure according to claim 3 or 4, further comprising hanging grooves formed in the respective fixing pieces so that the fixing pieces are not protruded externally and the head units of the coupling members are inserted into and latched in the hanging grooves.

7. The coupling structure according to any one of claims 1 to 6, wherein the bridge is made of nickel-plated shape memory alloys.

8. The coupling structure according to any one of claims 1 to 6, wherein the endpieces are made of nickel-plated shape memory alloys.

9. A method of coupling coupling units in rimless eyeglasses, the method comprising:
inserting coupling members into through holes formed in each of fixing pieces and fixing the coupling members and the fixing pieces using attachment plates;
coupling the fixing pieces and the coupling members, fixed together by the attachment plate, to a bridge or endpieces or both.

10. The method according to claim 9, wherein the fixing pieces and the coupling members are fixed together by means of spot welding by using silver solder plates as the attachment plates.

11. The method according to claim 10, wherein the attachment plates which are the silver solder plates attached to the fixing pieces and the coupling members are coupled to the endpieces or the bridge or both by means of soldering and welding.

12. The method according to any one of claims 9 to 11, wherein the fixing pieces and the coupling members, having the attachment plates coupled thereto, are attached to fixing grooves formed in the respective endpieces or the bridge or both.
